# EUROPEAN PATENT APPLICATION

(11) **EP 2 683 127 A1**
(43) Date of publication of application: **08.01.2014**
(21) Application number: 12290222.4
(22) Date of filing: 05.07.2012
(51) Int. Cl.: H04L 29/06, H04W 4/00, G06F 21/10

(54) **Voucher authorization for cloud server**

(71) Applicant: Alcatel Lucent, 75007 Paris (FR)
(72) Inventor: Foerster, Christopher, 70184 Stuttgart (DE); Strauss, Thomas, 73734 Esslingen (DE)
(74) Representative: Dreiss

(57) **Abstract**

The present invention relates to a method for granting access from a cloud server (2) to a client device (3, 4), comprising the steps of authorizing a user of a first client device (3), receiving an authorization voucher request from the first client device (3), generating an authorization voucher for accessing the cloud server (2), providing the authorization voucher to the first client device (3), receiving the authorization voucher from a second client device (4), granting access to the second client device (4) based on the authorization voucher.

The present invention also relates to a cloud server (2) adapted to perform the above method. The present invention further relates to a method for requesting access to a cloud server (2), comprising the steps of authorizing a user using a first client device (3) to the cloud server (2), sending an authorization voucher request from the first client device (3) to the cloud server (2), receiving an authorization voucher for accessing the cloud server (2) at the first client device (3), transmitting the authorization voucher from the first client device (3) to a second client device (4), transmitting the authorization voucher from the second client device (4) to the cloud server (3), and accessing the cloud server (2) from the second client device (4).

## Description

### TECHNICAL FIELD

The present invention relates to the area of user authorization for accessing services provided by a cloud server.

### BACKGROUND

Cloud servers provide cloud services, which comprise services accessible via a network connection. Accordingly, cloud services comprise services for data storage, data access, databases, media services including video streaming and others. The services are requested by client devices via the network connection from the cloud server.

For access to cloud servers, e.g. for the playback of a video on a video device like a TV-set, user authorization is frequently required. User authorization may be based on device authorization of a personal user device such as a mobile phone, so that after performing an initial authorization procedure further access to cloud servers can be realized without performing a repeated authorization. In some known systems, an initial authorization is performed via a user interface such as a keyboard. Some types of client devices include a simple and uncomfortable user interface that makes authorization using these devices difficult. Other types of client devices, in particular mobile client devices such as mobile phones, may not be suitable for accessing services provided by the cloud servers, e.g. due to hardware or software limitations of such client devices.

Some of these cloud services may further require the use of dedicated software to be executed on the client device for authorization, browsing and using the cloud service or may be bound to a particular manufacturer such as Apple iTunes Cloud. Accordingly, a specific client device or use of the client device from a known network, e.g. at home, may be required. There is no ready solution that allows using cloud services at foreign places. For example, there is no solution that allows watching a video provided by a cloud service on a third person's smart-TV at the third person's home if the third person is not registered at this cloud server.

### SUMMARY

Various embodiments provide a method and apparatus of providing a solution for providing secure access to a cloud server from a client device, at a third party location and without requirements for using additional software.

In a first embodiment, a method is provided for granting access from a cloud server to a client device, comprising the steps of authorizing a user of a first client device, receiving an authorization voucher request from the first client device, generating an authorization voucher for accessing the cloud server, providing the authorization voucher to the first client device, receiving the authorization voucher from a second client device, granting access to the second client device based on the authorization voucher.

In a second embodiment, a cloud server is provided for granting access to a client device, whereby the cloud server is adapted to perform the above method.

In a third embodiment, a method is provided for requesting access to a cloud server, comprising the steps of authorizing a user using a first client device to the cloud server, sending an authorization voucher request from the first client device to the cloud server, receiving an authorization voucher for accessing the cloud server at the first client device, transmitting the authorization voucher from the first client device to a second client device, transmitting the authorization voucher from the second client device to the cloud server, and accessing the cloud server from the second client device.

In the method, the first client device provides authorization for the second client device based on the authorization voucher. Authorization does not require use of the second client device to facilitate authorization for the second client device. Therefore, even if the second client device has a user interface which is difficult to use for performing authorization, the second client device may easily be used and authorization may easily be performed using the authorization voucher. Accordingly, the cloud server generates the authorization voucher based on the authorization of the first client device, to enable access to the cloud server from the second client device. It is merely required to verify the authorization voucher on the cloud server.

Second client devices, which may have a simple and uncomfortable user interface that makes authorization difficult, and first client devices, in particular mobile client devices such as mobile phones, which may not be suitable for accessing services provided by the cloud servers, may be used together to offer an enhanced user experience. Limitations of the first client device can be overcome by using the second client device. Such limitations can refer to hardware or software such as computational power, supported video capabilities, sound capabilities, input means including a keyboard, or compatibility with certain kinds of software.

Authorization of the user of the first client device can be based on a mechanism using a user ID and a password, as known in the Art. Further preferred, authorization of the first client device is performed using encryption or authentication. Still further preferred, authentication can be performed based on protection by SSL. The authorization of the first client device can be performed essentially at any time, i.e. before any of the above method steps. The authorization can be a permanent authorization which is performed once on the first client device and can be kept valid for multiple requests for authorization vouchers.

The client devices can be any kind of data processing devices suitable for accessing cloud services, including any kind of computer, laptop, tablet, mobile phones, video playback devices including TV-sets and others. The client devices include devices particularly designed for mobile use, and which are usually carried along by a user. The first client device is preferably a mobile device like a mobile phone or others. The second client device can be any kind of device, either mobile of fix. A connection between the cloud server and the client devices can be any kind of network connection using wired or wireless access to the network. Preferably, the network connection is an internet connection. Any kind of suitable connection can be used for transmitting the authorization voucher from the first client device to the second client device. Preferably, the authorization voucher is transmitted using a secure connection between the first and second client device.

According to a preferred embodiment the step of granting access to the second client device based on the authorization voucher comprises granting limited access limited in access type, number of accesses, data amount, or access time. The limited access increases security, since the authorization voucher is only usable within the specified limitation. Some limitations are basically permanent, like for example access type, which can be write or read access. Other limitations are dynamic, so that the authorization voucher expires e.g. after a given number of accesses to the cloud server, a given amount of data transferred between the cloud server and the second client device, or an access time for accessing the cloud server. Preferably, multiple limitations can be combined.

According to a preferred embodiment the step of sending an authorization voucher request comprises sending a request for limited access limited in access type, number of accesses, data amount, or access time. The user has full control over the authorization voucher, so that he can enable any kind of second client device in any place to securely access the cloud server. In particular, if the user wants to enable access to the cloud server using the second client device, he can specify any limitation corresponding to the intended use of the second client device already in advance so that the authorization voucher automatically limits the access to the cloud server.

According to a preferred embodiment the step of granting access to the second client device based on the authorization voucher comprises granting access to the cloud server for a pre-defined time period. This increases security, since the authorization voucher is useless after the time period, so that a third party cannot continuously access the cloud server in case the authorization voucher is stolen. After expiry of the time period, the authorization voucher automatically expires and cannot be used further.

According to a preferred embodiment the step of sending an authorization voucher request comprises sending a time period for validity of the requested authorization voucher. The user has full control over the authorization voucher, so that he can enable any kind of second client device in any place securely to access the cloud server. In particular, if the user wants to access the cloud server using the second client device for a specified time, he can specify the time period corresponding to the intended use of the second client device already in advance so that the authorization voucher automatically expires when the user stops using the second client device.

According to a preferred embodiment the method comprises the additional step of encrypting the authorization voucher subsequent to the step of generating an authorization voucher, and the method comprises the additional step of decrypting the authorization voucher after reception from the second client device. The use of encryption reduces the risk for falsification of authorization vouchers. Furthermore, information included in the authorization voucher cannot be accessed by third parties.

According to a preferred embodiment the step of receiving an authorization voucher request comprises receiving an identification of a requested service, the step of generating an authorization voucher for accessing the cloud server comprises adding the identification of the requested service, and the step of granting access to the second client device based on the authorization voucher comprises granting access to the requested service specified in the authorization voucher. Accordingly, the step of sending an authorization voucher request comprises sending an identification of a requested service of the cloud server and the step of accessing the cloud server from the second client device comprises accessing the requested service according to the identification of the requested service of the cloud server identified in the authorization voucher request. Access to further services offered by the cloud server is restricted, so that a user can request an authorization voucher without caring about other services provided by the cloud server, which might contain private information of the user. Even if the authorization voucher is received by a third party, this party cannot access services which are not explicitly enabled by the user of the first client device.

According to a preferred embodiment the cloud server comprises a media server, a file server, or a conferencing server. Preferably, the media server is a video streaming server.

According to a preferred embodiment the step of authorizing a user using a first client device to the cloud server comprises providing user identification information assigned to the first client device to the cloud server. User authorization can be facilitated by means of the user identification information, which can be stored on the first client device. When the first client device requests a voucher from the cloud server, the user identification information can be automatically transmitted from the first client device to the cloud server without further interaction from the user of the first client device. In internet browsers, this feature is implemented using so-called cookies.

According to a preferred embodiment the step of transmitting the authorization voucher from the first client device to a second client device comprises transmitting the authorization voucher using a point-to-point connection between the two client devices. The point-to-point connection can be any kind of connection which is suitable for transmitting the authorization voucher to the second client device only. The point-to-point connection can be a direct radio or wire connection between the two client devices. The point-to-point connection can also be any kind of logical point-to-point connection via any kind of network service. Preferably, the point-to-point connection is a short range communication connection. Further preferred, the point-to-point connection uses encryption or authentication.

According to a preferred embodiment the step of transmitting the authorization voucher from the first client device to the second client device comprises transmitting the authorization voucher using a connection between the two client devices according to the near field communication standard. Near field communication (NFC) is easy to use and therefore suitable for transmitting the authorization voucher from any kind of first client device to any kind of second client device supporting NFC. Security is increased due to a limited communication range.

### BRIEF DESCRIPTION OF THE DRAWINGS

Some embodiments of apparatus in accordance with the present invention are now described, by way of example only, and with reference to the accompanying drawings, in which:
- Fig. 1: is a schematic view showing a cloud server, a first client device, and a second client device, which are interconnected to each other,
- Fig. 2: is a diagram showing method steps between the cloud server, the first client device and second client device,
- Fig. 3: schematically illustrates an embodiment of the cloud server to perform the method implemented therein, and
- Fig. 4: schematically illustrates an embodiment of the first and second client devices to perform the method implemented therein.

### DETAILED DESCRIPTION OF ILLUSTRATIVE EMBODIMENTS

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Additionally, the term, "or," as used herein, refers to a non-exclusive or, unless otherwise indicated (e.g., "or else" or "or in the alternative"). Also, the various embodiments described herein are not necessarily mutually exclusive, as some embodiments can be combined with one or more other embodiments to form new embodiments.

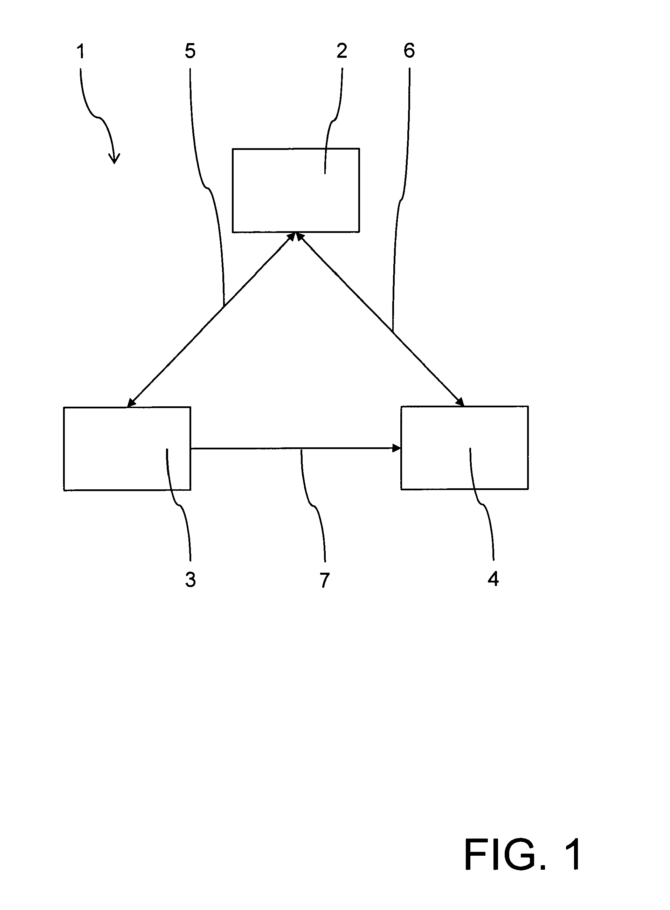

Figure 1 shows a communication system 1 comprising a cloud server 2 and two client devices 3, 4. The cloud server 2 is a video streaming server in this embodiment. Authorization is required in order to access the cloud server 2. The communication system 1 may comprise additional cloud servers 2 or client devices 3, 4, which are not shown in Fig. 1.

The client devices 3, 4 comprise a first client device 3, which is a mobile phone, in particular a smartphone, in this embodiment, and a second client device 4, which is a smart TV supporting HbbTV in this embodiment.

The client devices 3, 4 are connected to the cloud server 1 via network connections 5, 6. The network connection 5 between the first client device 3 and the cloud server 2 comprises a mobile network connection, e.g. using a UMTS or LTE connection. The network connection 6 between the second client device 4 and the cloud server 2 comprises an Ethernet connection.

The client devices 3, 4 are both provided with communication means, which are not shown in detail, for creating a point-to-point connection 7. The point-to-point connection 7 in this embodiment is a connection according to the near field communication (NFC) standard in this embodiment.

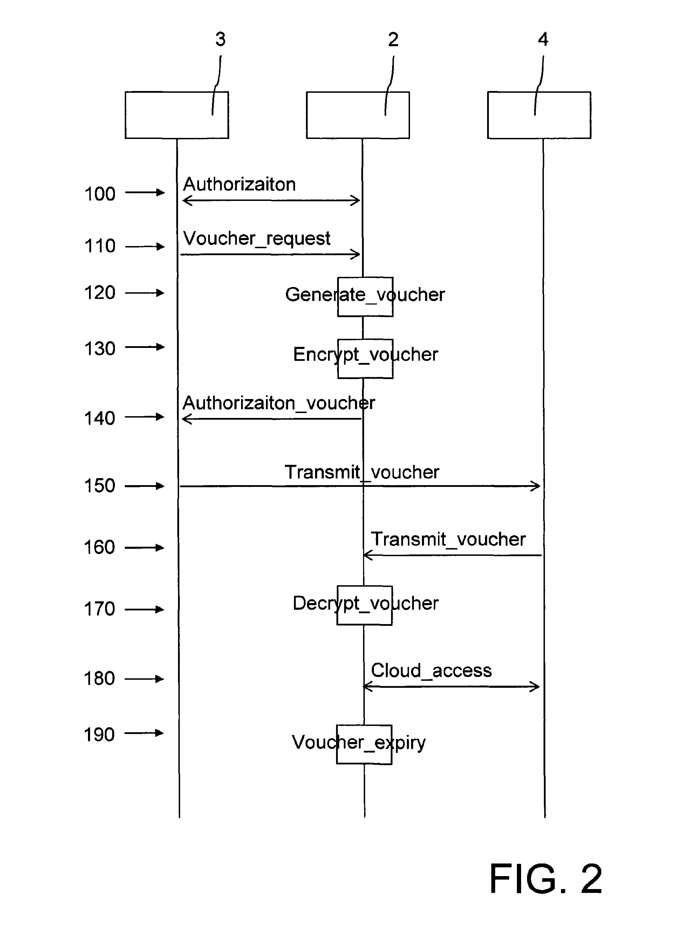

A method for requesting access to the cloud server 2 and for granting access from the cloud server 2 to the second client device 4 is illustrated with reference to Fig. 2.

Initially, authorization of a user of the first client device 3 to the cloud server 2 is performed in step 100. User identification information assigned to the first client device 3 is provided to the cloud server 2. The user identification is based on a prior authorization with user ID and password, which was transmitted via a SSL connection to the cloud server 2.

In step 110 an authorization voucher request is sent from the first client device 3 via the mobile network connection 5 and received by the cloud server 2. In this embodiment, the authorization voucher request comprises an identification of a requested service of the cloud server 2, a time period for validity of the requested authorization voucher, and an access limitation limiting the access to a number of three accesses within an access time of one day.

In step 120, the cloud server 2 processes the authorization voucher request and generates the requested authorization voucher as specified. Accordingly, the generated authorization voucher for accessing the cloud server 2 comprises the identification of the requested service as requested in step 110.

In step 130, the cloud server 2 encrypts the authorization voucher prior to providing the authorization voucher to the first client device 3, which receives the authorization voucher via the mobile network connection 5 in step 140.

In step 150, the first client device 3 transmits the authorization voucher to the second client device 4 via the NFC-connection 7.

In step 160 the second client device 4 starts access to the cloud server 2. Since authorization is required, the smart TV 4 transmits the authorization voucher to the cloud server 2 via the Ethernet connection 6, so that the cloud server 2 receives the authorization voucher.

In step 170 the cloud server 2 decrypts the authorization voucher received from the smart TV 4.

In step 180 the second client device 4 accesses the cloud server 2. In particular, the second client device 4 accesses the requested service according to the identification of the requested service of the cloud server 2 identified in the authorization voucher request. The cloud server 2 grants the requested access based on the authorization voucher, i.e. the cloud server 2 grants access to the service specified in the authorization voucher. Furthermore, the cloud server 2 grants limited access as specified in the authorization voucher request, i.e. limiting the access to a number of three accesses within an access time of one day.

In step 190, access from the second client device 4 to the cloud server 2 is aborted due to expiry of the time period pre-defined in the authorization voucher request in step 110. The time period expiry is calculated based on the reception of the authorization voucher request from the first client device 3 to the cloud server 2 in step 110.

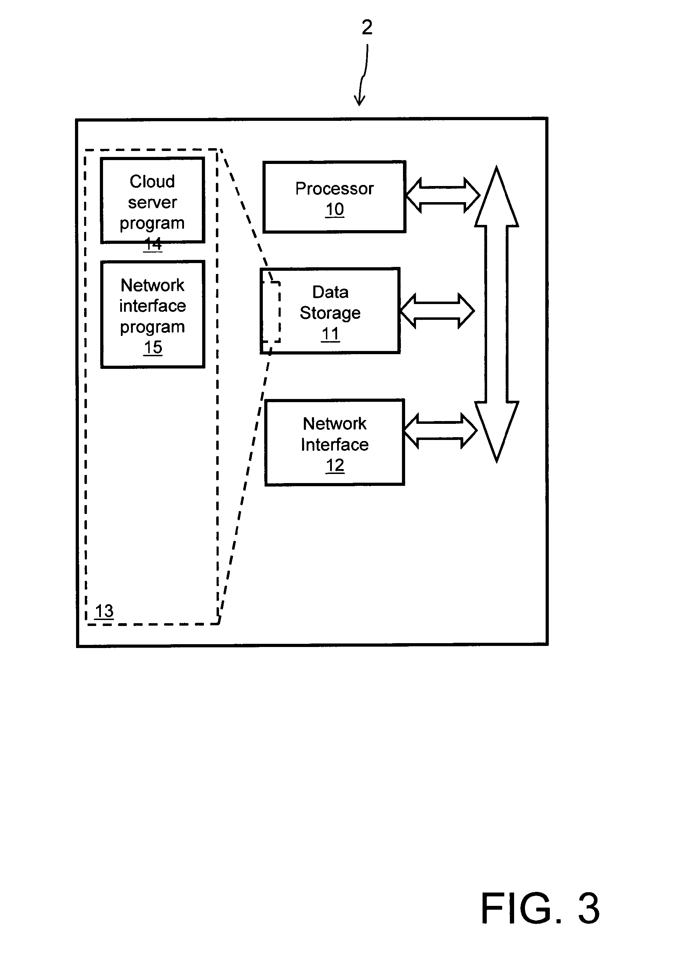

Fig. 3 schematically illustrates an embodiment of the cloud server 2. The cloud server 2 includes a processor 10, a data storage 11, and an network interface 12. The network interface 12 is adapted for connection to the network connections 5, 6.

The processor 10 controls the operation of the cloud server 2. The processor 10 cooperates with the data storage 11. The data storage 11 may store program data such as network topology or the like as appropriate. The data storage 11 also stores programs 13 executable by the processor 10. The processor-executable programs 13 may include a cloud server program 14 and a network interface program 15. The processor 10 cooperates with the processor-executable programs 13.

The network interface 12 cooperates with processor 10 and network interface program 15 to support communications over any suitable communication channel(s).

The cloud server program 14 performs the steps of the above method as executed on the cloud server 2.

In some embodiments, the processor 10 may include resources such as processors / CPU cores, the network interface 12 may include any suitable type of network interface, or the data storage 11 may include memory or storage devices. Moreover the cloud server 2 may be any suitable physical hardware configuration.

In some embodiments, the cloud server 2 may be virtual machine. In some of these embodiments, the virtual machine may include components from different machines or be geographically dispersed. For example, the data storage 11 and the processor 10 may be in two different physical machines.

In some embodiments, the cloud server 2 may be a general purpose computer programmed to perform the part of the above method to be executed on the cloud server 2.

When processor-executable programs 13 are implemented on a processor 10, the program code segments combine with the processor 10 to provide a unique device that operates analogously to specific logic circuits.

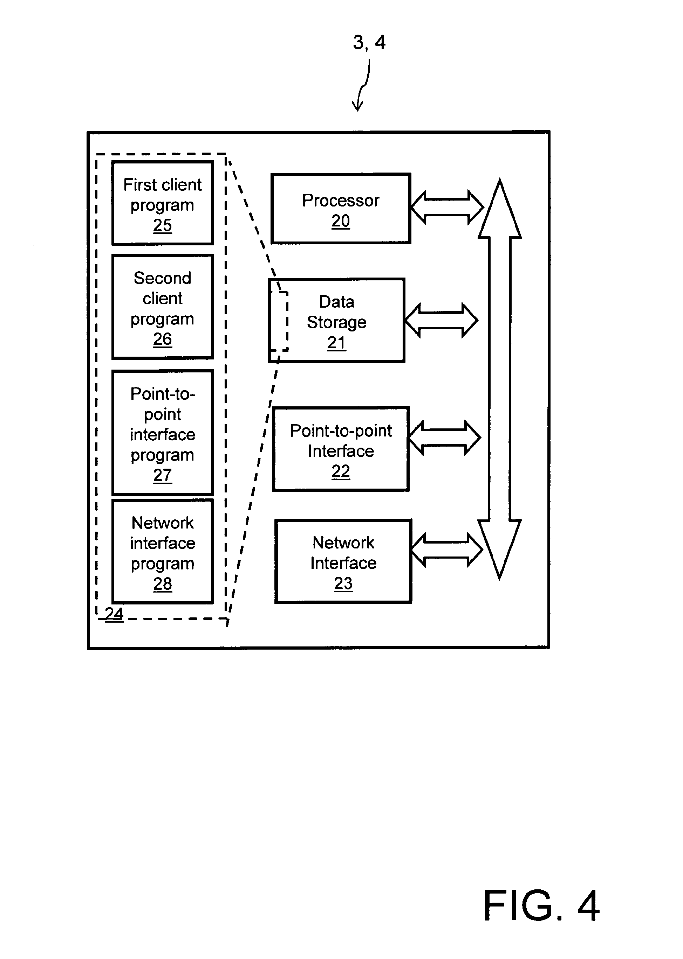

Fig. 4 schematically illustrates an embodiment of the client device 3, 4. Since the implementation of the first and second client device 3, 4 can be identical, these devices are described together. The client device 3, 4 can be merely distinguished by the kind of usage. A client device can be used as first or second client device 3, 4.

The client device 3, 4 includes a processor 20, a data storage 21, a point-to-point interface 22, and an network interface 23. The point-to-point interface 22 is adapted for connection to the point-to-point connection 7. The network interface 23 is adapted for connection to the network connections 5, 6.

The processor 20 controls the operation of the client device 3, 4. The processor 20 cooperates with the data storage 21. The data storage 21 may store program data such as network topology or the like as appropriate. The data storage 21 also stores programs 24 executable by the processor 20. The processor-executable programs 24 may include a first client program 25, a second client program 26, a point-to-point interface program 27, and a network interface program 28. The processor 20 cooperates with the processor-executable programs 24.

The point-to-point interface 22 cooperates with processor 20 and point-to-point interface program 27 to support communications over any suitable point-to-point communication channel(s).

The network interface 23 cooperates with processor 20 and network interface program 28 to support communications over any suitable communication channel(s).

The first and second client programs 25, 26 perform the steps of the above method as executed on the first and second client device 3, 4, respectively.

In some embodiments, the processor 20 may include resources such as processors 20 / CPU cores, the point-to-point interface 23 may include any suitable type of interface, the network interface 23 may include any suitable type of network interface, or the data storage 21 may include memory or storage devices. Moreover the client device 3, 4 may be any suitable physical hardware configuration.

In some embodiments, the client device 3, 4 may be a general purpose computer programmed to perform the part of the above method to be executed on the respective client device 3, 4.

When processor-executable programs 24 are implemented on a processor 20, the program code segments combine with the processor 20 to provide a unique device that operates analogously to specific logic circuits.

## Claims

1. A method for granting access from a cloud server (2) to a client device (3, 4), comprising the steps of
authorizing a user of a first client device (3), receiving an authorization voucher request from the first client device (3),
generating an authorization voucher for accessing the cloud server (2),
providing the authorization voucher to the first client device (3),
receiving the authorization voucher from a second client device (4),
granting access to the second client device (4) based on the authorization voucher.

2. The method according to claim 1,
**characterized in that**
the step of granting access to the second client device (4) based on the authorization voucher comprises granting limited access limited in access type, number of accesses, data amount, or access time.

3. The method according to claim 1,
**characterized in that**
the step of granting access to the second client device (4) based on the authorization voucher comprises granting access to the cloud server (2) for a pre-defined time period.

4. The method according to claim 1,
**characterized in that**
the method comprises the additional step of encrypting the authorization voucher subsequent to the step of generating an authorization voucher, and
the method comprises the additional step of decrypting the authorization voucher after reception from the second client device (4).

5. The method according to claim 1,
**characterized in that**
the step of receiving an authorization voucher request comprises receiving an identification of a requested service of the cloud server (2),
the step of generating an authorization voucher for accessing the cloud server (2) comprises adding the identification of the requested service, and
the step of granting access to the second client device (4) based on the authorization voucher comprises granting access to the requested service specified in the authorization voucher.

6. A cloud server (2) for granting access to a client device (2, 3),
**characterized in that**
the cloud server (2) is adapted to perform the method of any of claims 1 to 5.

7. The cloud server (2) according to claim 6, **characterized in that**
the cloud server (2) comprises a media server, a file server, or a conferencing server.

8. A method for requesting access to a cloud server (2), comprising the steps of
authorizing a user using a first client device (3) to the cloud server (2),
sending an authorization voucher request from the first client device (3) to the cloud server (2),
receiving an authorization voucher for accessing the cloud server (2) at the first client device (3),
transmitting the authorization voucher from the first client device (3) to a second client device (4),
transmitting the authorization voucher from the second client device (4) to the cloud server (3), and
accessing the cloud server (2) from the second client device (4).

9. The method according to claim 8,
**characterized in that**
the step of authorizing a user using a first client device (3) to the cloud server (2) comprises providing user identification information assigned to the first client device (3) to the cloud server (2).

10. The method according to claim 8,
**characterized in that**
the step of transmitting the authorization voucher from the first client device (3) to a second client device (4) comprises transmitting the authorization voucher using a point-to-point connection between the two client devices.

11. The method according to claim 10,
**characterized in that**
the step of transmitting the authorization voucher from the first client device (3) to the second client device (4) comprises transmitting the authorization voucher using a connection between the two client devices (3, 4) according to the near field communication standard.

12. The method according to claim 8,
**characterized in that**
the step of sending an authorization voucher request comprises sending an identification of a requested service of the cloud server (2), and
the step of accessing the cloud server (2) from the second client device (4) comprises accessing the requested service according to the identification of the requested service of the cloud server (2) identified in the authorization voucher request.

13. The method according to claim 8,
**characterized in that**
the step of sending an authorization voucher request comprises sending a time period for validity of the requested authorization voucher.

14. The method according to claim 8,
**characterized in that**
the step of sending an authorization voucher request comprises sending a request for limited access limited in access type, number of accesses, data amount, or access time.

## Amended claims

### Amended claims in accordance with Rule 137(2) EPC.

**1.** A method for granting access from a cloud server (2) to a client device (3, 4), comprising the steps of
authorizing a user of a first client device (3),
receiving an authorization voucher request from the first client device (3),
generating an authorization voucher for accessing the cloud server (2),
providing the authorization voucher to the first client device (3),
receiving the authorization voucher from a second client device (4),
granting access to the second client device (4) based on the authorization voucher.

**2.** The method according to claim 1,
**characterized in that**
the step of granting access to the second client device (4) based on the authorization voucher comprises granting limited access limited in access type, number of accesses, data amount, or access time.

**3.** The method according to claim 1,
**characterized in that**
the step of granting access to the second client device (4) based on the authorization voucher comprises granting access to the cloud server (2) for a pre-defined time period.

**4.** The method according to claim 1,
**characterized in that**
the method comprises the additional step of encrypting the authorization voucher subsequent to the step of generating an authorization voucher, and
the method comprises the additional step of decrypting the authorization voucher after reception from the second client device (4).

**5.** The method according to claim 1,
**characterized in that**
the step of receiving an authorization voucher request comprises receiving an identification of a requested service of the cloud server (2),
the step of generating an authorization voucher for accessing the cloud server (2) comprises adding the identification of the requested service, and
the step of granting access to the second client device (4) based on the authorization voucher comprises granting access to the requested service specified in the authorization voucher.

**6.** A cloud server (2) for granting access to a client device (3, 4),
**characterized in that**
the cloud server (2) is adapted to perform the method of any of claims 1 to 5.

**7.** The cloud server (2) according to claim 6,
**characterized in that**
the cloud server (2) comprises a media server, a file server, or a conferencing server.

**8.** A method for requesting access to a cloud server (2), comprising the steps of
authorizing a user using a first client device (3) to the cloud server (2),
sending an authorization voucher request from the first client device (3) to the cloud server (2),
receiving an authorization voucher for accessing the cloud server (2) at the first client device (3),
transmitting the authorization voucher from the first client device (3) to a second client device (4),
transmitting the authorization voucher from the second client device (4) to the cloud server (3), and
accessing the cloud server (2) from the second client device (4).

**9.** The method according to claim 8,
**characterized in that**
the step of authorizing a user using a first client device (3) to the cloud server (2) comprises providing user identification information assigned to the first client device (3) to the cloud server (2).

**10.** The method according to claim 8,
**characterized in that**
the step of transmitting the authorization voucher from the first client device (3) to a second client device (4) comprises transmitting the authorization voucher using a point-to-point connection between the two client devices.

**11.** The method according to claim 10,
**characterized in that**
the step of transmitting the authorization voucher from the first client device (3) to the second client device (4) comprises transmitting the authorization voucher using a connection between the two client devices (3, 4) according to the near field communication standard.

**12.** The method according to claim 8,
**characterized in that**
the step of sending an authorization voucher request comprises sending an identification of a requested service of the cloud server (2), and
the step of accessing the cloud server (2) from the second client device (4) comprises accessing the requested service according to the identification of the requested service of the cloud server (2) identified in the authorization voucher request.

**13.** The method according to claim 8,
**characterized in that**
the step of sending an authorization voucher request comprises sending a time period for validity of the requested authorization voucher.

**14.** The method according to claim 8,
**characterized in that**
the step of sending an authorization voucher request comprises sending a request for limited access limited in access type, number of accesses, data amount, or access time.
